# EUROPEAN PATENT APPLICATION

(11) **EP 4 748 606 A1**
(43) Date of publication of application: **27.05.2026**
(21) Application number: 25204057.1
(22) Date of filing: 23.09.2025
(51) Int. Cl.: B60K 35/10, B60K 35/26, B60K 35/28, B60R 16/023, H04N 21/414, B60K 35/20, B60R 16/02

(54) **CONTROL DEVICE, CONTROL METHOD, AND COMPUTER PROGRAM**

(30) Priority: 22.11.2024 JP 2024204089
(71) Applicant: TOYOTA JIDOSHA KABUSHIKI KAISHA, Toyota-shi, Aichi-ken 471-8571 (JP)
(72) Inventor: OGAWA, Takahiro, Toyota-shi, 471-8571 (JP); JEONG, Jaemin, Kariya-city, 448-8661 (JP); MURATA, Seiji, Kariya-city, 448-8661 (JP)
(74) Representative: J A Kemp LLP

(57) **Abstract**

The control device (40) includes a control part (43) configured to play content and perform control of a vehicle function in conjunction with the content. The control part (43) is configured to generate control data for controlling the vehicle function based on a feature amount of the content, play the content in response to a playback request for the content, and control the vehicle function in conjunction with playback of the content based on the control data during playback of the content.

## Description

### TECHNICAL FIELD

The present invention relates to a control device, a control method, and a computer program.

### BACKGROUND ART

Patent Literature 1 discloses a system for autonomously controlling the operation of in-vehicle devices such as car audio systems and lighting equipment in accordance with the detection results of the state of a user.

### CITATION LIST

### PATENT LITERATURE

PTL 1 Japanese Unexamined Patent Publication (Kokai) No. 2006-282115

### SUMMARY

### TECHNICAL PROBLEM

However, the system described above cannot operate the in-vehicle devices unless the state of the user is in a limited predetermined state. When trying to operate an in-vehicle device, etc., by controlling a vehicle function in conjunction with the playback of content such as music content or video content, if the in-vehicle device can be operated only when limited content is played, the marketability of the vehicle may be reduced. Thus, linking the playback of a wide variety of content to control vehicle functions and operate in-vehicle devices, etc., is desired.

The present invention aims to solve such problems, and an object thereof is controlling a vehicle function in conjunction with the playback of a wide variety of content.

### SOLUTION TO PROBLEM

In order to solve the above problem, the control device according to one aspect of the present invention includes a control part configured to play content and perform control of a vehicle function in conjunction with the content. The control part is configured to generate control data for controlling the vehicle function based on a feature amount of the content, play the content in response to a playback request for the content, and control the vehicle function in conjunction with playback of the content based on the control data during playback of the content.

Further, the control method according to one aspect of the present invention includes playing content and performing control of a vehicle function in conjunction with the content, generating control data for controlling the vehicle function based on a feature amount of the content, playing the content in response to a playback request for the content, and controlling the vehicle function in conjunction with playback of the content based on the control data during playback of the content.

Further, the control program according to one aspect of the present invention causes a computer to play content and perform control of a vehicle function in conjunction with the content, generate control data for controlling the vehicle function based on a feature amount of the content, play the content in response to a playback request for the content, and control the vehicle function in conjunction with playback of the content based on the control data during playback of the content.

### ADVANTAGEOUS EFFECTS OF INVENTION

According to these aspects of the present invention, since control data for controlling the vehicle function based on the feature amount of the content can automatically be generated, the vehicle function can be controlled based on the generated control data, in conjunction with the playback of arbitrary content.

### BRIEF DESCRIPTION OF DRAWINGS

FIG. 1 is a schematic configuration view of a control system according to a first embodiment of the present invention.
FIG. 2 is a view detailing a method of generating control data for a content linking device while analyzing content in a time series manner, and operating the content linking device in conjunction with the playback of content after a predetermined time has elapsed since the start of analysis.
FIG. 3 is a flowchart showing an example of content linking processing according to a second embodiment of the present invention.

### DESCRIPTION OF EMBODIMENTS

The embodiments of the present invention will be described in detail below with reference to the drawings. Note that in the following descriptions, identical constituent elements have been assigned the same reference signs.

### (First Embodiment)

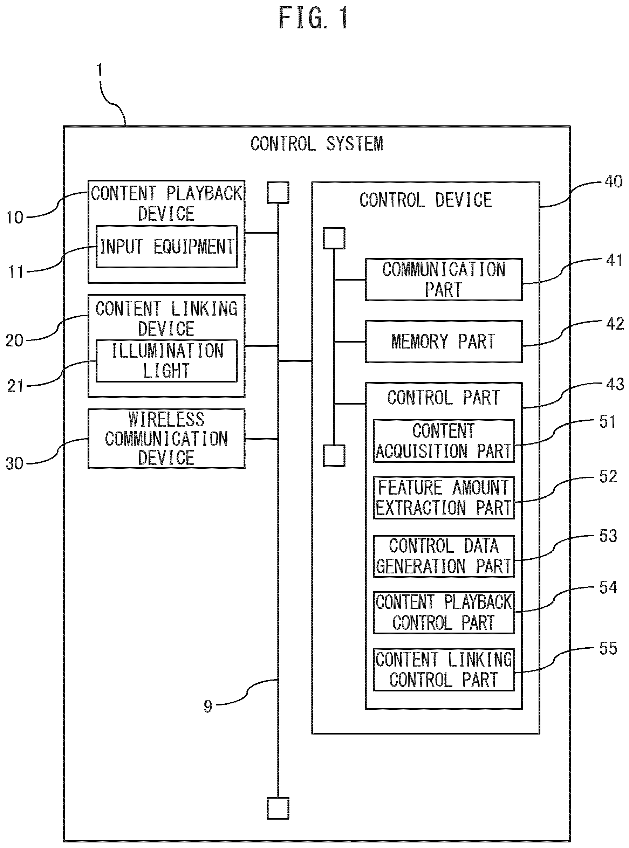

FIG. 1 is a schematic configuration view of a control system 1 according to a first embodiment of the present invention.

The control system 1 includes a content playback device 10, a content linking device 20, a wireless communication device 30 and a control device 40, and is configured to be capable of operating the content linking device 20 in conjunction with content when the content is played by the content playback device 10. In the present embodiment, the content playback device 10, the content linking device 20, the wireless communication device 30, and the control device 40 are mounted in a vehicle, and are communicatively connected to each other via an in-vehicle network 9 that complies with a standard such as control device area network.

The content playback device 10 includes an input equipment 11 for a vehicle occupant (hereinafter referred to as a "user") for performing input operations, and is an in-vehicle device capable of playing content such as music content or video content selected by the user by operating the input equipment 11. The content playback device 10 is, for example, a display audio which is capable of playing both music content and video content selected by the user, and the input equipment 11 is, for example, a touch panel or a microphone of the display audio.

In addition to such a display audio, the content playback device 10 may also be, for example, a car audio device which is capable of playing music content selected by the user.

The content linking device 20 is an in-vehicle device which can operate in conjunction with content during playback of the content. The operation of the content linking device 20 is controlled by the control device 40. In the present embodiment, the content linking device 20 includes an illumination light 21 installed in the vehicle. The illumination light 21 is a lighting device including full-color LEDs in which a red LED chip, a green LED chip, and a blue LED chip are sealed with a light-transmitting resin, and is configured to be capable of changing the emission color of the full-color LEDs to arbitrary emission colors by controlling each LED chip.

In addition to the illumination light 21, examples of the content linking device 20 include, for example, a seat, an air conditioner, and light-adjusting glass. When the content linking device 20 is a seat, for example, the seat can be moved or vibrated in conjunction with the content. When the content linking device 20 is an air conditioner, for example, the air conditioner can be made to blow air or change the strength of the air in conjunction with the content. When the content linking device 20 is light-adjusting glass provided on a vehicle door, a vehicle roof, etc., the color or transparency of the light-adjusting glass can be changed in conjunction with the content.

The wireless communication device 30 is an in-vehicle device for executing wireless communication processing conforming to a predetermined wireless communication standard. The wireless communication device 30 is connected to an external server (not illustrated) by accessing a wireless base station that is connected to a communication network to which the external server is connected via a gateway or the like.

The control device 40 is an electronic control unit (ECU) including a communication part 41, a memory part 42, and a control part 43.

The communication part 41 has a communication interface circuit for connecting the control device 40 to an in-vehicle network. The communication part 41 supplies received data to the control part 43. The communication part 41 outputs data supplied from the control part 43 to the outside.

The memory part 42 has a storage medium such as a hard disk drive (HDD), a solid disk drive (SSD), or a semiconductor memory, and stores various computer programs and data used for processing by the control part 43.

The control part 43 has one or more central processing units (CPUs) and peripheral circuits thereof, and executes various computer programs stored in the memory part 42. The control part 43 is, for example, a processor. The control part 43 functions as a content acquisition part 51, a feature amount extraction part 52, a control data generation part 53, a content playback control part 54, and a content linking control part 55 by executing processing in accordance with computer programs, and operates as a functional part (module) for realizing predetermined functions. In the following description, processing described with each of the functional parts 51 to 55 as the subject indicates that the control part 43 is executing a program for realizing each of the functional parts 51 to 55.

The content acquisition part 51 stores content acquired from the outside in the memory part 42. For example, the content acquisition part 51 can acquire content distributed from an external server via the wireless communication device 30 automatically or in response to an acquisition request from a user operating the input equipment 11 of the content playback device 10. The content acquisition part 51 can, for example, acquire content stored in a user terminal (for example, a smartphone) connected to the content playback device 10 by wire or wirelessly from the terminal.

The feature amount extraction part 52 extracts a feature amount of the content acquired by the content acquisition part 51.

When the content is music content, the volume, pitch, etc., of the music fluctuate over time. Thus, when the content is music content, time-series data of at least one of the volume and pitch (frequency) can be extracted as the feature amount of the music content.

Furthermore, when the content is video content, the hue, saturation, etc., of the image displayed on the display fluctuate over time. Thus, when the content is video content, at least one of the time series data of the average color of the entirety or a specific portion (for example, the central region of the image) of the image, and the time series data of the hue of the part having the highest saturation of the image can be extracted as the feature amount of the video content. Furthermore, in the video content, since the sound fluctuates over time, the time series data of the volume and the pitch of the sound may be extracted as the feature amount of the video content.

The feature amount of each content can be extracted by, for example, inputting each content into a machine learning model that has been trained in advance so as to extract the feature amount of each content.

The control data generation part 53 generates time-series data of a control amount of the content linking device 20 (hereinafter referred to as "control data of the content linking device 20") that operates in conjunction with the content when the content is played based on the feature amount of the content. When the content linking device 20 is the illumination light 21, for example, the number of full-color LEDs to be turned on and the light emission color of the full-color LEDs can be used as the control amount of the illumination light 21.

For example, when the content is music content and the content linking device 20 is the illumination light 21, the control data generation part 53 can generate time series data of the number of full-color LEDs to be turned on based on time series data of the volume of the music content. Further, when the content is video content and the content linking device 20 is the illumination light 21, the control data generation part 53 can generate time series data of the emission color of the full-color LEDs based on time series data of the average color of the image central region of the video content.

When the content playback control part 54 receives a content playback request from a user operating the input equipment 11 of the content playback device 10, it controls the content playback device 10 to play the content.

When the content linking control part 55 receives a content playback request from a user operating the input equipment 11 of the content playback device 10, it controls the content linking device 20 so as to synchronize with the playback of the content based on the time series data of the control amount of the content linking device 20 related to the content.

The control device 40 of the control system 1 according to the present embodiment described above includes a control part 43 for playing the content and controlling the content linking device 20 (vehicle function) in conjunction with the content. The control part 43 is configured to play the content in response to a playback request for the content, generate control data for controlling the content linking device 20 based on the feature amount of the content, and control the content linking device 20 in conjunction with the playback of the content based on the control data during playback of the content.

Usually, in order to operate the content linking device 20 in conjunction with the playback of content, it is necessary that a developer create control data for the content linking device 20 in advance and the content linking device 20 be operated in accordance with the previously created control data. Thus, conventionally, the content linking device 20 could be operated only when playing back limited content for which control data was previously created by a developer.

In contrast, according to the present embodiment, since the control part 33 can automatically generate control data for the content linking device 20 related to the content based on the feature amount of the content, the content linking device 20 can be operated in conjunction with playback of a wide variety of arbitrary content selected by the user. Furthermore, since there is no need to generate a large amount of control data for the content linking device 20 related to the content for each content in advance and store it in, for example, the memory part 42, the manhours required for generating control data can be reduced while suppressing insufficient storage capacity or excessive expansion of the memory part 42.

The control part 43 of the control device 40 of the control system 1 according to the present embodiment is configured to acquire content from outside and extract the feature amount of the acquired content.

As a result, even if the feature amount of the content is not prepared in advance, the content linking device 20 can be operated in conjunction with the playback of the content simply by acquiring the content from outside.

### (Second Embodiment)

Next, a second embodiment of the present invention will be described. The present embodiment differs from the first embodiment in that a feature amount of a content is extracted while the content is being played, and time-series data of the control amount of the content linking device 20 is generated based on the extracted feature amount of the content. The following description will focus on this difference.

For example, when a content playback request acquired by the content acquisition part 51 is made immediately after the acquisition of the content, after the content acquisition, a playback request for the content may be made before the feature amount of the content is extracted and the generation of the control data of the content linking device 20 is fully completed.

In such a case, if content playback is started after the completion of the generation of control data for the content linking device 20 in order to operate the content linking device 20 in conjunction with content playback, there is a risk that it will take too long to start the playback of the content. Conversely, if an attempt is made to operate the content linking device 20 in real time while playing the content based on, for example, the volume of the content without generating the control data for the content linking device 20 in advance, it is necessary to detect the volume, etc., and operate the content linking device 20 based on the detection result, and thus, synchronization errors may occur due to communication delays or the like, and the operation of the content linking device 20 may not be synchronized with the playback of the content.

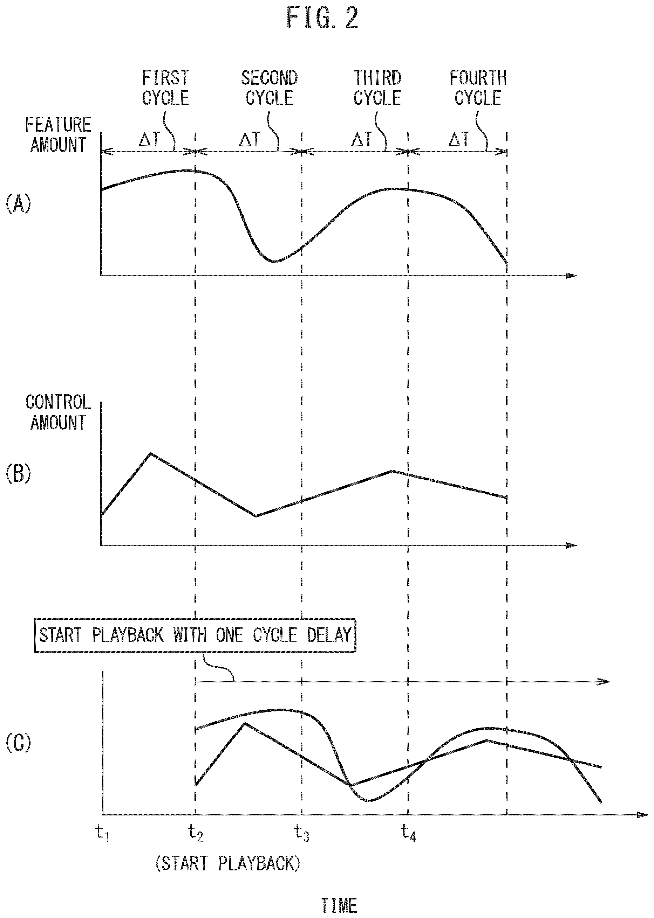

Thus, in the present embodiment, as shown in FIG. 2, the content is analyzed sequentially in a time series manner, for example, every predetermined cycle time ΔT [s], and playback of the content is started with a one cycle delay after analysis of content in an initial one cycle (the content of the first cycle) is completed, and the content linking device 20 is operated in conjunction with the playback of the content.

FIG. 2(A) is a view showing time series data of the feature amount (for example, volume) of content when the content is played. FIG. 2(B) is a view showing time series data of the control amount determined in accordance with the feature amount of the content of FIG. 2(A). FIG. 2(C) is a view showing how the control amount of the content linking device 20 changes in synchronization with the feature amount of the content without causing synchronization deviation, when the content linking device 20 is operated in conjunction with the playback of the content from time t2.

As shown in FIGS. 2(A) and 2(B), in the present embodiment, in the period from time t1 to time t2, the feature amount of the content of the first cycle is extracted, and control data for the content linking device 20 for the first cycle is generated based on the extracted feature amount. Then, as shown in FIG. 2(C), playback of the content is started at time t2, which is one cycle later, and the content linking device 20 is operated based on the control data of the content linking device 20 for the first cycle.

As shown in FIGS. 2(A) and 2(B), in the period during which playback of the content of the first cycle is being performed from time t2 to time t3, the feature amount of the content of the next cycle (the content of the second cycle) is extracted, and control data for the content linking device 20 for the second cycle is generated based on the extracted feature amount. As a result, the content of the second cycle can be played from time t3 consecutively to the content of the first cycle, and the content linking device 20 can be operated in conjunction with the playback of the content, as shown in FIG. 2(C).

Likewise, as shown in FIGS. 2(A) and 2(B), in the period during which playback of the content of the second cycle is being performed from time t3 to time t4, content of the next cycle (the content of the third cycle) is analyzed. As a result, the content of the third cycle can continuously be played from time t4, and the content linking device 20 can be operated in conjunction with the playback of the content, as shown in FIG. 2(C).

By repeating this, according to the present embodiment, even if the feature amount of the content and the control data of the content linking device 20 do not exist, the content linking device 20 can be operated in conjunction with the playback of the content with only a one-cycle delay while generating the control data of the content linking device 20.

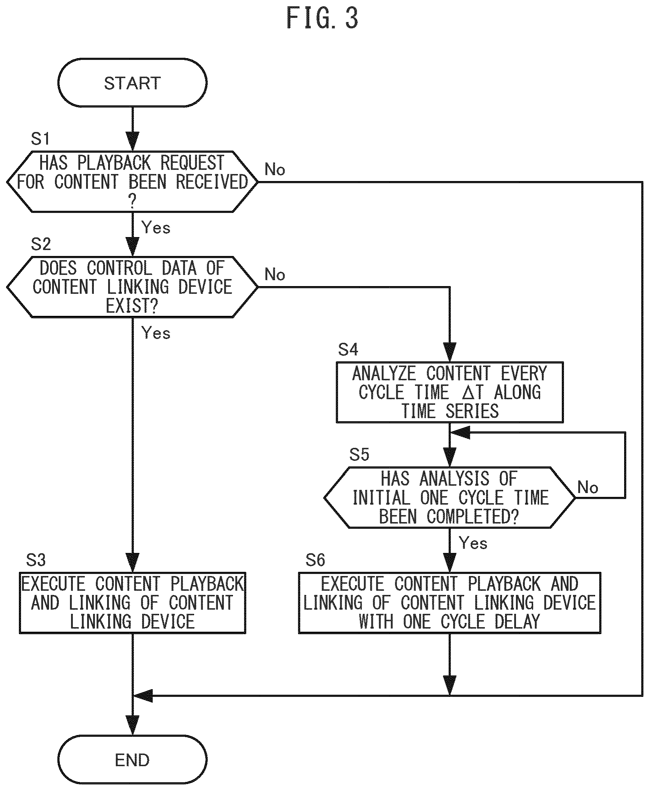

FIG. 3 is a flowchart illustrating an example of content linking processing according to the present embodiment.

In step S1, the control device 40 judges whether a playback request for the content has been received. If the control device 40 has received a playback request for the content, the control device 40 advances to the processing of step S2. Conversely, if the control device 40 has not received a playback request for the content, the control device 40 ends this processing.

In step S2, the control device 40 judges whether control data of the content linking device 20 related to the content for which the playback request is being made has already been generated and exists. If control data of the content linking device 20 related to the content for which the playback request is being made exists, the control device 40 advances to the processing of step S3. Conversely, if control data of the content linking device 20 related to the content for which the playback request is being made does not exist, the control device 40 advances to the processing of step S4.

In step S3, the control device 40 plays the content, and operates the content linking device 20 in conjunction with the playback of the content, based on the control data of the content linking device 20 related to the content that already exists.

In step S4, the control device 40 starts processing for sequentially analyzing the content every predetermined cycle time ΔT [s] in a time series manner. Specifically, the control device 40 starts processing for sequentially analyzing the content for the predetermined cycle time ΔT in the time series manner to sequentially extract the feature amount of the content, and sequentially generating control data of the content linking device 20 related to the content based on the sequentially extracted feature amount.

In step S5, the control device 40 judges whether the analysis of the content for an initial one cycle has been completed. Specifically, the control device 40 judges whether the extraction of the feature amount of the content of the first cycle and the generation of the control data of the content linking device 20 related to the content of the first cycle have been completed. If the analysis of the content for the initial one cycle has been completed, the control device 40 advances to the processing of step S6. Conversely, if the analysis of the content for the initial one cycle has not been completed, the control device 40 waits a predetermined interval and judges again whether the analysis of the content for the initial one cycle has been completed.

In step S6, the control device 40 starts playback of the content with a one cycle delay, and operates the content linking device 20 in conjunction with the playback of the content based on the control data of the content linking device 20 sequentially generated in step S4 prior to the playback of the content.

In the present embodiment, after the analysis of the content of the initial one cycle is completed in step S5, playback of the content is started with a one cycle delay in step S6. However, this is not limited to the above, and for example, playback of the content may be started with several cycles delay after the analysis of content for the initial several cycles is completed.

The control part 43 of the control device 40 of the control system 1 according to the present embodiment described above is further configured to, when playing content in response to a playback request for the content, if the control data of the content linking device 20 related to the content does not exist, sequentially generate the control data of the content linking device 20 related to the content by sequentially analyzing a predetermined cycle time of the content in a time series manner, and after generating control data of the content linking device 20 for at least the initial one cycle time, start playback of the content and control the content linking device 20 (vehicle function) in conjunction with the playback of the content based on the control data of the content linking device 20 sequentially created prior to the playback of the content.

As a result, the content linking device 20 can be operated in conjunction with the playback of the content at the time when the generation of a part of the control data of the content linking device 20 is completed. Thus, after the content acquisition, the content linking device 20 can be operated in conjunction with the playback of the content in a short time. Further, since the content linking device 20 can be operated based on the generated control data, the operation of the content linking device 20 can be prevented from being out of sync with the playback of the content.

Though the embodiments of the present invention have been described above, the above-mentioned embodiments merely illustrate some of the application examples of the present invention, and it is not intended that the technical scope of the present invention be limited to the specific configurations of the above-mentioned embodiments.

For example, in the above embodiments, though the content acquisition part 51 acquires content from an external server, etc., when the feature amount of the content can be acquired from an external server, etc., together with the content, the feature amount of the content may be acquired from the external server, etc. Accordingly, the control part 43 may be configured to acquire the content and the feature amount of the content from the outside.

Furthermore, for example, in the above embodiments, the computer program executed by the control device 40 may be provided in a form recorded on a computer-readable portable recording medium such as a semiconductor memory, a magnetic recording medium, or an optical recording medium, or may be provided as a computer program product.

### DESCRIPTION OF REFERENCE SIGNS

- 1: control system
- 20: content linking device
- 40: control device

## Claims

1. A control device (40), comprising a control part (43) configured to play content and perform control of a vehicle function in conjunction with the content, wherein
the control part (43) is configured to:
generate control data for controlling the vehicle function based on a feature amount of the content;
play the content in response to a playback request for the content; and
control the vehicle function in conjunction with playback of the content based on the control data during playback of the content.

2. The control device (40) according to claim 1, wherein the control part (43) is further configured to:
when playing the content in response to the playback request for the content, if the control data related to the content does not exist, sequentially generate the control data related to the content by sequentially analyzing a predetermined cycle time of the content in a time series manner, and after generating the control data related to the content for at least initial one cycle time, start playback of the content and control the vehicle function in conjunction with the playback of the content based on the control data sequentially created prior to the playback of the content.

3. The control device (40) according to claim 1 or 2, wherein the control part (43) is further configured to:
acquire the content from outside and extract a feature amount of the acquired content.

4. The control device (40) according to claim 3, wherein the control part (43) is further configured to:
extract, when the content is music content, at least one of time series data of volume and pitch of the music content as a feature amount of the music content.

5. The control device (40) according to claim 3 or 4, wherein the control part (43) is further configured to:
extract, when the content is video content, at least one of time series data of an average color of an entirety or a specific part of an image of the video content, time series data of a hue of a part having a highest saturation of an image of the video content, and time series data of volume and pitch of sound of the video content as a feature amount of the video content.

6. The control device (40) according to claim 1 or 2, wherein the control part (43) is further configured to:
acquire the content and the feature amount of the content from outside.

7. The control device (40) according to claim 6, wherein the feature amount of the content includes, when the content is music content, at least one of time series data of volume and pitch of the music content, and includes, when the content is video content, at least one of time series data of an average color of an entirety or a specific part of an image of the video content, time series data of a hue of a part having a highest saturation of an image of the video content, and time series data of volume and pitch of sound of the video content.

8. A control method by a control device (40) for playing content and performing control of a vehicle function in conjunction with the content, comprising:
generating control data for controlling the vehicle function based on a feature amount of the content;
playing the content in response to a playback request for the content; and
controlling the vehicle function in conjunction with playback of the content based on the control data during playback of the content.

9. A computer program, which cause a computer to:
play content and perform control of a vehicle function in conjunction with the content;
generate control data for controlling the vehicle function based on a feature amount of the content;
play the content in response to a playback request for the content; and
control the vehicle function in conjunction with playback of the content based on the control data during playback of the content.
